# EUROPÄISCHE PATENTANMELDUNG

(11) **EP 4 787 500 A2**
(43) Veröffentlichungstag der Anmeldung: **05.08.2026**
(21) Anmeldenummer: 26186634.7
(22) Anmeldetag: 22.12.2020
(51) Int. Cl.: H01M 4/74

(54) **ELEKTROCHEMISCHE NATRIUM-METALLHALOGENID-ZELLE UND VERFAHREN ZU IHRER HERSTELLUNG**

(30) Priorität: 23.12.2019 DE 102019135752
(62) Teilanmeldung aus: 20845384.5
(71) Anmelder: Fraunhofer-Gesellschaft zur Förderung der angewandten Forschung e.V., 80686 München (DE)
(72) Erfinder: Hofacker, Martin, 07747 Jena (DE)
(74) Vertreter: Gleim Petri Patent- und Rechtsanwaltspartnerschaft mbB

(57) **Zusammenfassung**

Die Erfindung betrifft eine elektrochemische Natrium-Metallhalogenid-Zelle, enthaltend ein Gehäuse (5) mit einer zentralen Achse (51), einen um die zentrale Achse (51) des Gehäuses (5) äquidistant zum Gehäuse (5) ausgedehnten Separator (3), der als fester Primärelektrolyt einen Anodenraum (41) von einem Kathodenraum (21) elektrisch isolierend und hermetisch abtrennt, aber durchlässig ist für Natriumionen, eine den Kathodenraum (21) füllende Kathode (2) aus einem porösen Gemisch von Metallpulver- und Metallhalogenidpulver-Granulaten sowie einen den Kathodenraum (21) und das poröse Gemisch der Kathode (2) durchtränkenden Sekundärelektrolyt (22) aus einer Natrium-Metallhalogenid-Salzschmelze und einen im Kathodenraum (21) um die zentrale Achse (51) langgestreckt ausgebildeten metallischen kathodenseitigen Stromabnehmer (1), wobei der Stromabnehmer (1) oberhalb eines in das im Separator (3) befindliche poröse Gemisch von Granulaten der Kathode (2) und im Sekundärelektrolyt (22) eingetauchten, gepressten Rohrabschnitts (12) einen ungepressten Rohrabschnitt als Einfüllrohr (13) zum Befüllen des Kathodenraumes (21) aufweist und wobei an einem Übergang vom gepressten Rohrabschnitt (12) zum ungepressten Rohrabschnitt des Einfüllrohres (13) mindestens ein das Einfüllrohr (13) nach außen öffnendes Durchgangsloch (14) vorhanden ist.

## Beschreibung

Die Erfindung betrifft eine elektrochemische Natrium-Metallhalogenid-Zelle, enthaltend ein Gehäuse mit einer zentralen Achse, einen um die zentrale Achse des Gehäuses äquidistant zum Gehäuse ausgedehnten Separator, der als fester Primärelektrolyt einen Anodenraum von einem Kathodenraum elektrisch isolierend und hermetisch abtrennt, aber durchlässig ist für Natriumionen, eine den Kathodenraum füllende Kathode aus einem porösen Gemisch von Metallpulver- und Metallhalogenidpulver-Granulaten sowie einen den Kathodenraum und das poröse Gemisch der Kathode durchtränkenden Sekundärelektrolyt aus einer Natrium-Metallhalogenid-Salzschmelze und einen im Kathodenraum um die zentrale Achse langgestreckt ausgebildeten metallischen kathodenseitigen Stromabnehmer, sowie ein Verfahren zur Herstellung der elektrochemischen Zelle. Die Anwendung der Erfindung erfolgt vorzugsweise als Natrium-Metallhalogenid-Zelle, insbesondere als Natrium-Nickelchlorid-Zelle, in Hochleistungsbatterien für Elektrofahrzeuge und anspruchsvolle stationäre Anwendungen.

Die vorgenannten elektrochemischen Zellen enthalten eine im geladenen Zustand aus mindestens einem Metall bestehende Anode und eine zumeist in poröser Form ausgebildete Kathode aus Übergangsmetallen und Metallhalogeniden (z. B. Natrium, Nickel, Eisen, Kupfer, Aluminium), die mit einer mindestens im Betriebszustand flüssigen Salzschmelze zur Ionenleitung getränkt ist, und einen metallischen Stromkollektor zur elektrischen Kontaktierung der Kathode.

Aus dem Stand der Technik der Akkumulatoren bzw. Sekundärbatterien ist bekannt, dass elektrochemische Zellen auf Basis von Natrium-Metallhalogenid-Chemie insbesondere für Hochleistungsbatterien in elektrischen Fahrzeugen und anspruchsvollen stationären Anwendungen eingesetzt werden, weil sie hohe spezifische Leistungs-, Energiedichten und eine hohe Zyklenlebensdauer aufweisen. Dabei handelt es sich um eine Thermalbatterie, bei der die Anode durch ein thermisch verflüssigtes Alkali-Metall (Natrium) und die Kathode durch eine flüssige Salzschmelze, die ein poröses Material aus Metallen und Metallhalogeniden (z. B. Nickelchlorid und Natriumchlorid) durchtränkt, gebildet wird und die beiden Elektroden durch einen elektrisch isolierenden Separator getrennt sind, der als fester Elektrolyt wirkt (z. B. Natrium-β-Aluminat mit größtmöglicher ß"-Phase, das ab 270°C sehr gut Natriumionen leitet, d. h. für Natriumionen durchlässig ist). Derartige Batterien weisen keine elektrochemische Selbstentladung auf und haben einen Energiewirkungsgrad von ca. 90% und einen Coulomb-Wirkungsgrad von 100 %.

In der US 2015/0004456 A1 ist in diesem Zusammenhang ein Stromkollektor für eine Natrium-Metallhalogenid-Zelle beschrieben, bei dem eine lamellenförmige Ausbildung des Stromkollektors ein hohes Leistungsvermögen und Kostenersparnisse der elektrochemischen Zellen ermöglichen soll. Der Stromkollektor hat mindestens eine flache langgestreckte Finne aus elektrisch leitendem Material, weist eine Biegung bezüglich seiner dominanten longitudinalen Achse auf und ist mit dem gebogenen oberen Ende an einen flachen Metallring geschweißt oder gelötet, der die Befestigung des Stromkollektors am Zellendeckel bei exakt mittiger Ausrichtung der Finne(n) in der Zellenachse gestattet. In einer bevorzugten Ausführung sind zwei komplementär geschlitzte Lamellen mit für einen Kohlenstofffilz freigehaltener Mitte gekreuzt angeordnet. Nachteilig ist jedoch zum einen in allen unterschiedlich ausgeführten Formen des Stromkollektors das Erfordernis, die Lamellen stoffschlüssig und genau ausgerichtet mit dem Metallring zu verbinden, und zum anderen, dass für die Speicherung der flüssigen Salzschmelze ein Kohlenstofffilz mit nicht unerheblichen Abmaßen zwischen die Bleche positioniert werden muss, der nur bedingt in seiner Lage fixiert ist. Da der Kohlenstofffilz selbst Raum einnimmt, wird die elektrische Speicherkapazität der Na/MCl₂-Zelle gemindert. Durch einen nicht exakt positionierten Kohlenstofffilz ergeben sich lokal unterschiedliche Stromdichten, bedingt durch unterschiedlich dicke Kathodenbereiche, und somit können die Zelleneigenschaften von Zelle zu Zelle abweichen.

Der Erfindung liegt die Aufgabe zugrunde, eine neue Möglichkeit zur Realisierung einer elektrochemischen Natrium-Metallhalogenid-Zelle zu finden, die die Gestaltung des Stromabnehmers mit maximalem Oberflächen-Querschnitt-Verhältnis ermöglicht und dabei dessen Ausrichtung entlang der Symmetrieachse der elektrochemischen Zelle zur Erreichung einer gleichmäßigen Stromdichteverteilung in der Elektrode um den Stromabnehmer und eine fertigungstechnisch einfache Herstellung desselben sowie eine vereinfachte Montage der elektrochemischen Natrium-Metallhalogenid-Zelle im Hinblick auf die Befüllung mit den Elektrodenbestandteilen gestattet. Eine erweiterte Aufgabe der Erfindung ist es, die Funktion der räumlichen Zwischenspeicherung der Salzschmelze in den Stromabnehmer zu integrieren.

Erfindungsgemäß wird die Aufgabe bei einer elektrochemischen Natrium-Metallhalogenid-Zelle, enthaltend ein Gehäuse mit einer zentralen Achse, einen um die zentrale Achse des Gehäuses äquidistant zum Gehäuse ausgedehnten Separator, der als fester Primärelektrolyt einen Anodenraum von einem Kathodenraum elektrisch isolierend und hermetisch abtrennt, aber durchlässig ist für Natriumionen, eine den Kathodenraum füllende Kathode aus einem porösen Gemisch von Metallpulver- und Metallhalogenidpulver-Granulaten sowie einen den Kathodenraum und das poröse Gemisch der Kathode durchtränkenden Sekundärelektrolyt aus einer Natrium-Metallhalogenid-Salzschmelze und einen im Kathodenraum um die zentrale Achse langgestreckt ausgebildeten metallischen kathodenseitigen Stromabnehmer, dadurch gekennzeichnet, dass der Stromabnehmer ein Metallrohr mit einer hohen elektrischen Leitfähigkeit von σ > 106 S/m ist, das in dem im Separator befindlichen porösen Gemisch von Granulaten der Kathode und im Sekundärelektrolyt eingetaucht und als ein gepresster Rohrabschnitt innen so verengt ausgebildet ist, dass kein Granulat der Kathode, sondern lediglich Sekundärelektrolyt eindringen kann, und nach außen mit Elementen zur Oberflächenvergrößerung des Stromabnehmers versehen ist, und dass der Stromabnehmer oberhalb des eingetauchten, gepressten Rohrabschnitts einen ungepressten Rohrabschnitt als Einfüllrohr zum Befüllen des Kathodenraumes aufweist, wobei an einem Übergang vom gepressten Rohrabschnitt zum ungepressten Rohrabschnitt des Einfüllrohres mindestens ein das Einfüllrohr nach außen öffnendes Durchgangsloch vorhanden ist, sodass das Einfüllrohr zum Einfüllen für das poröse Gemisch von Granulaten der Kathode in den Kathodenraum nur außerhalb des gepressten Rohrabschnitts und zum Befüllen des gesamten Kathodenraumes mit Sekundärelektrolyt verwendbar ist.

Vorteilhaft weist der Stromabnehmer in dem gepressten Rohrabschnitt einen Kohlenstofffilz auf, der in den gepressten Rohrabschnitt vor dem Pressen eingelegt war.

Zweckmäßig weist der Stromabnehmer in dem gepressten Rohrabschnitt einen Kohlenstofffilz auf, der nach dem Pressen und dem Abtragen einer Quetschkante des gepressten Rohrabschnitts in den gepressten Rohrabschnitt lateral einschiebbar ist.

Bevorzugt weist der Stromabnehmer in dem gepressten Rohrabschnitt als Elemente zur Oberflächenvergrößerung Stanzungen, vorzugsweise in Form von Durchgangslöchern, auf. Dabei weist der Stromabnehmer in dem gepressten Rohrabschnitt in den Durchgangslöchern zweckmäßig befestigte Metallbüschel von Metallstreifen oder -drähten aus einem nicht durch die elektrochemischen Prozesse der Zelle angegriffenen Metall mit vergleichbar hoher Leitfähigkeit wie das Metallrohr des Stromabnehmers auf.

Zweckmäßig wird als Stromabnehmer ein kommerziell verfügbares Nickel-, Aluminium- oder Kupferrohr verwendet.

Beim Stromabnehmer sind die Elemente zur Oberflächenvergrößerung ausgebildet mit wenigstens einem Element aus der Gruppe von gestanzten Durchgangslöchern oder anderen reliefbildenden Strukturen mit Quetschkanten, Metallbüscheln, Finnen oder gefalteten Blechen. Dabei sind die Metallbüschel vorzugsweise aus Metallstreifen oder -drähten aus Nickel oder Molybdän gefertigt.

Es erweist sich als besonders vorteilhaft, wenn die Metallbüschel von Metallstreifen oder -drähten so ausgerichtet sind, dass lokale Widerstandsgradienten im Kathodenraum minimiert oder gleichmäßig über den Querschnitt des Kathodenraums verteilt sind.

In einer weiteren vorteilhaften Ausführung weisen die in den Metallbüscheln verwendeten Metallstreifen oder -drähte eine Länge auf, die umso kleiner gewählt ist, je höhere Kapazitäten der Zelle erreicht werden sollen, und umso größer, bis maximal an den Separator heran, gewählt ist, je höhere Leistungen der Zelle entnommen werden sollen.

Vorzugsweise ist der ungepresste Rohrabschnitt des Einfüllrohres des Stromabnehmers nach dem Einfüllen des porösen Gemisches der Kathode und des Sekundärelektrolyten mit einer stoffschlüssig befestigten Blechronde oder einem Tiefziehteil verschlossen. Alternativ ist es zweckmäßig, dass der ungepresste Rohrabschnitt des Einfüllrohres des Stromabnehmers nach dem Einfüllen des porösen Gemisches der Kathode und des Sekundärelektrolyten am oberen Rohrende des Einfüllrohres gequetscht oder mit einer Löt- oder Schweißnaht hermetisch verschlossen ist.

Bevorzugt kann der gepresste Rohrabschnitt des Stromabnehmers durch Krafteinwirkung von zwei kollinearen Richtungen aus flach gepresst sein.

In einer weiteren vorteilhaften Ausführung ist der gepresste Rohrabschnitt des Stromabnehmers aus mindestens drei gleichverteilt um die zentrale Achse versetzten Richtungen zu einem sternförmigen Querschnitt gepresst.

Der gepresste Rohrabschnitt des Stromabnehmers ist vorzugsweise durch die vorstehend genannten Krafteinwirkungen so gepresst, dass ein sich bildender Innenraum als Sekundärelektrolyt-Reservoir gerade so groß ausfällt, wie ein Volumen des Sekundärelektrolyts, das im vollgeladenen Zustand der Zelle für die vollständige Benetzung des Stromabnehmers notwendig ist, vorgehalten wird.

Es erweist sich ferner als zweckmäßig, wenn unterhalb des gepressten Rohrabschnitts des Stromabnehmers ein Metallrohr angefügt ist, das mit radialen Finnen besetzt ist, die in tangential äquidistante Schlitze des Metallrohres eingefügt sind.

In einer anderen vorteilhaften Ausführung ist unterhalb des gepressten Rohrabschnitts des Stromabnehmers ein Metallrohr mit radialen Finnen angefügt, das aus einem äquidistant gefalteten Blech und dessen axialsymmetrischer Biegung erzeugt ist.

Des Weiteren wird die Aufgabe in einem Verfahren zur Herstellung einer elektrochemischen Natrium-Metallhalogenid-Zelle gelöst mit den Schritten:
- Bereitstellen eines Gehäuses zur Bildung eines Anodenraumes, eines äquidistant zum Gehäuse einsetzbaren Separators als elektrisch isolierender, nur für Natriumionen durchlässiger, fester Primärelektrolyt zur Trennung des Anodenraumes von einem Kathodenraum, einer Kathode aus einem porösen Gemisch von Metallpulver- und Metallhalogenid-Granulaten und eines Sekundärelektrolyts zum Durchtränken des porösen Gemisches der Kathode,
- Herstellen eines kathodenseitigen Stromabnehmers aus einem Metallrohr, das durch radial auf eine zentrale Achse wirkende Kräfte zu einem zusammengepressten Rohrabschnitt Stromabnehmers geformt wird und bei dem am oberen Ende ein ungepresster Rohrabschnitt als Einfüllrohr verbleibt, wobei mindestens an einem Übergang vom gepressten Rohrabschnitt zum Einfüllrohr ein Durchgangsloch eingebracht wird, das als Austrittsöffnung des Einfüllrohres zum Befüllen des Kathodenraum vorgesehen ist,
- Herstellen eines Zellenverschlusses aus einem Kathodenverschlussteil mit einer zentralen Öffnung zur Durchführung des Einfüllrohres des Stromabnehmers in der zentralen Öffnung des Kathodenverschlussteils und stoffschlüssiges Verbinden des Kathodenverschlussteils mit einem Isolatorfügering und stoffschlüssiges Anfügen eines Anodenverschlussteils an den Isolatorfügering,
- Positionieren des Stromabnehmers kollinear mit der zentralen Achse in dem Separator sowie dem äquidistant um den Separator angeordneten Gehäuse mittels des Zellenverschlusses aus Isolatorfügering und Anodenverschlussteil durch einen Ein-Schritt-Fügeprozess sowie stoffschlüssiges Verbinden der Fügestellen,
- Einfüllen des porösen Gemisches von Metallpulver- und Metallhalogenidpulver-Granulaten der Kathode durch das Einfüllrohr des Stromabnehmers und das mindestens eine Durchgangsloch des Einfüllrohres in den Kathodenraum im Separator nur außerhalb des Stromabnehmers und anschließendes Eingießen des Sekundärelektrolyts in flüssiger Form unter Sauerstoffausschluss und
- endgültiges hermetisches Abdichten der elektrochemischen Zelle durch stoffschlüssiges Verschließen des Einfüllrohres.

Zweckmäßig werden Elemente zur Oberflächenvergrößerung des Stromabnehmers in den gepressten Rohrabschnitt in Form von Durchgangslöchern äquidistant eingebracht. Sie können aber auch in einen ungepressten Rohrabschnitt eingebracht und/oder als Elemente aus der Gruppe von anderen reliefbildenden Strukturen mit Quetschkanten, Metallbüscheln, Finnen oder gefalteten Blechen im gepressten oder ungepressten Rohrabschnitt ausgebildet werden.

Es erweist sich als besonders vorteilhaft, in die Durchgangslöcher Metallbüschel aus Metallstreifen oder -draht einzufügen.

Der gepresste Rohrabschnitt des Stromabnehmers wird bevorzugt durch kollineare radiale Krafteinwirkung flach ausgeformt.

In einer alternativen Variante wird der gepresste Rohrabschnitt des Stromabnehmers durch mehrere um die zentrale Achse gleichverteilte radiale Krafteinwirkungen vorteilhaft sternförmig ausgeformt.

In einer weiteren bevorzugten Ausführung des Stromabnehmers werden zur Oberflächenvergrößerung des Stromabnehmers unterhalb des gepressten Rohrabschnitts an das Metallrohr radiale Finnen angebracht, die in tangential äquidistante Schlitze eingeschoben werden.

Des Weiteren können zur Oberflächenvergrößerung des Stromabnehmers unterhalb des gepressten Rohrabschnitts an das Metallrohr radiale Finnen durch ein gefaltetes Blech erzeugt werden, das entweder um das Metallrohr gewunden oder selbst zu einem Körper mit einem rohrförmigen Innenraum gebogen wird.

Das Verschließen des Einfüllrohres erfolgt zweckmäßig durch Verschweißen oder Verlöten des oberen Rohrendes mit einer Blechronde. Alternativ kann das Verschließen des Einfüllrohres aber auch durch Quetschen des oberen Rohrendes und abschließendes Verschweißen oder Verlöten des gequetschten oberen Rohrendes erfolgen.

Durch die Erfindung wird eine Möglichkeit aufgezeigt, wie für eine elektrochemische Natrium-Metallhalogenid-Zelle ein Stromabnehmer zu gestalten ist, um eine axialsymmetrische Stromverteilung innerhalb des Elektrolytmaterials und eine unkomplizierte Einfüllung der Kathodenbestandteile und eine technologisch einfache und kostengünstige Fertigung des Stromabnehmers sowie dessen Montage in der elektrochemischen Zelle zu erreichen. Durch eine vergrößerte Oberfläche des Stromabnehmers wird der Übergangswiderstand zu metallischen Komponenten der Kathode verringert, wodurch der Innenwiderstand bzw. die Verlustleistung der Zelle gemindert und die Leistungsfähigkeit erhöht wird.

Die Erfindung wird nachfolgend anhand von Ausführungsbeispielen und Abbildungen näher erläutert. Dabei zeigen:
- Fig. 1:: eine schematische Prinzipdarstellung eines erfindungsgemäßen kathodenseitigen Stromabnehmers, hergestellt aus einem abschnittsweise gepressten Metallrohr mit Stanzungen;
- Fig. 2:: eine weitere Ausführungsform des kathodenseitigen Stromabnehmers gemäß Fig. 1 mit runden Stanzungen ausgeführt, die mit Metalldrahtbüscheln durchzogen sind;
- Fig. 3:: eine schematische Schnittdarstellung des Ausschnitts A aus Fig. 1 mit einer durchgehenden Stanzung am Übergangsbereich vom Einfüllrohr zum gepressten Rohrabschnitt des Stromabnehmers;
- Fig. 4:: eine schematische Darstellung der Stromverteilung im Kathodenraum innerhalb der in Fig. 2 markierten Radialebene B, die im gepressten Rohrabschnitt des Stromabnehmers eine Bohrung mit eingelegtem Metalldrahtbüschel schneidet;
- Fig. 5:: ein bevorzugtes Ausführungsbeispiel der elektrochemischen Natrium-Metallhalogenid-Zelle mit einem Separator aus Natrium-β-Aluminat und einem kathodenseitigen Stromabnehmer aus vernickeltem Kupferrohr;
- Fig. 6:: eine weitere Ausführung des erfindungsgemäßen Stromabnehmers nach dem Pressen des Metallrohres mit einseitig entfernter Quetschkante, vorzugsweise zum Einschieben eines Kohlenstofffilzes;
- Fig. 7:: die Ausführung des Stromabnehmers von Fig. 6 nach dem Einfüllen der Kathodenmaterialien mit abschließend gequetschtem und verschmolzenem oberen Ende des Einfüllrohres;
- Fig. 8:: eine weitere Ausführung des erfindungsgemäßen Stromabnehmers mit abschließend gequetschtem und verschmolzenem oberen Rohrende des Einfüllrohres, wobei der untere gepresste Rohrabschnitt des Metallrohres aus mehreren nicht parallelen radialen Richtungen zentrisch zusammengepresst ist;
- Fig. 9:: einen Querschnitt der Ausführung des Stromabnehmers nach Fig. 8, bei dem der untere gepresste Rohrabschnitt aus vier orthogonalen radialen Richtungen gepresst ist, von denen jeweils zwei kollinear entgegengesetzt zur Rohrachse gerichtet sind.
- Fig. 10:: eine weitere Ausführung des erfindungsgemäßen Stromabnehmers nach Fig. 8, wobei das Einfüllrohr mit abschließend gequetschtem oberem Rohrende auf ein separat aus vier orthogonalen radialen Richtungen gepresstes Metallrohr als unterer Rohrabschnitt angefügt ist, wobei Querschnittsunterschiede zwischen Einfüllrohr und radial gepresstem Metallrohr die Stanzungen für die Befüllöffnungen ersetzen;
- Fig. 11:: die weitere Ausführung des erfindungsgemäßen Stromabnehmers mit Einfüllrohr, gepresstem Rohrabschnitt und mit radialen Finnen besetztem Metallrohr, das im Innern ein Reservoir für den Sekundärelektrolyt aufweist;
- Fig. 12:: eine weitere Ausführung des Stromabnehmers nach Fig. 11, bei der die Finnen durch ein äquidistant gefaltetes Blech und das Metallrohr durch das axialsymmetrisch gebogene Blech nachgebildet ist;
- Fig. 13:: einen Ausschnitt einer gegenüber Fig. 5 erweiterten Doppelzellenanordnung der elektrochemischen Zelle mit doppelwandigem Separator, der den Anodenraum beinhaltet, sowie innerem und äußerem Kathodenraum mit jeweiligen Stromabnehmern.

Eine erfindungsgemäße elektrochemische Natrium-Metallhalogenid-Zelle umfasst in einem beispielhaften Grundaufbau einen kathodenseitigen Stromabnehmer 1, eine Kathode 2 aus Natriumsalz und einem weiteren Metallhalogenid, einen Separator 3, der als fester Primärelektrolyt einen Kathodenraum 21 von einem Anodenraum 41 trennt, einen Sekundärelektrolyt 22, der den Kathodenraum 21 mit dem Stromabnehmer 1 durchsetzt, eine Anode 4 und ein Gehäuse 5, das den anodenseitigen Stromabnehmer darstellt.

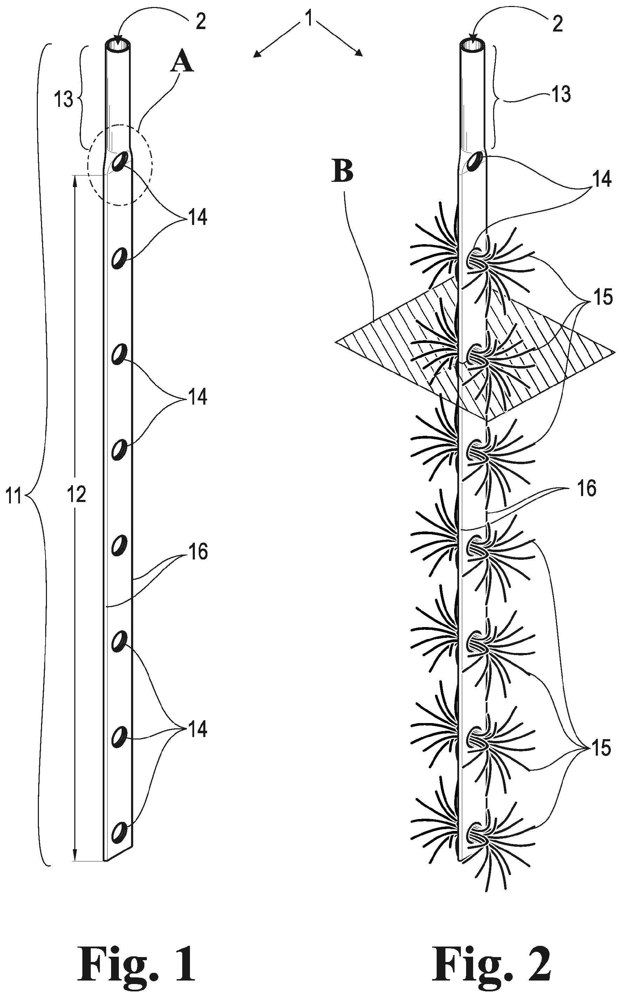

Fig. 1 zeigt eine bevorzugte Ausführung des kathodenseitigen Stromabnehmers 1, der ausgehend von einem rohrförmigen Grundkörper (Metallrohr 11) aus einem elektrisch gut leitenden Metall (σ > 10⁶ S/m) in einen unteren gepressten Rohrabschnitt 12, der sich im Kathodenraum 21 entlang der zentralen Achse 51 des Separators 3 erstreckt, und einen oberen ungepressten Rohrabschnitt, der oberhalb des Kathodenraumes 21 ein Einfüllrohr 13 für das Kathodenmaterial bildet, unterteilt ist. Das anfänglich ungepresste Metallrohr 11 und das verbleibende Einfüllrohr 13 können in ihren Querschnitten auch viereckig, vieleckig, gewellt oder anderweitig von einer Kreisgeometrie abweichend gefertigt sein.

In dem gepressten Rohrabschnitt 12 wird so viel Sekundärelektrolyt 22 zwischengespeichert, wie im vollgeladenen Zustand für die vollständige Benetzung der porösen Kathode 2 benötigt wird. Die Kathode 2 kann während des Ladens, bei dem das Volumen des porösen Kathodengranulats um ca. 20% gemindert wird, den flüssigen Sekundärelektrolyt 22 aus dem Inneren des Stromabnehmers 1 nachfüllen. Für eine gute Elektronenleitung und somit einen geminderten Innenwiderstand der Na/Metallhalogenid-Zelle sollte die Länge des Stromabnehmers 1 so weit wie möglich an den Boden des Separators 3 heranreichen. Seine Länge sollte deshalb deutlich größer als 70% der Länge des Separators 3 gewählt werden, wobei tubuläre Na/Metallchlorid-Zellen vorteilhaft mit Längen zwischen 50 mm und 500 mm gefertigt werden. Die elektrische Speicherkapazität wird durch den mit poröser Kathode 2 gefüllten Kathodenraum 21 zwischen der Außenkontur des Stromabnehmers 1 und der Innenwandung des Separators 3 bestimmt, womit der Durchmesser des Stromabnehmers 1 besonders vorteilhaft zwischen 4 mm und 50 mm zu wählen ist, wenn der Durchmesser des Separators 3 mit 15 mm bis 90 mm angenommen wird. Werden am Stromabnehmer 1 noch Elemente zur Oberflächenvergrößerung angebracht, wie nachfolgende noch genauer beschrieben, können bei den angenommenen Durchmessern des Separators 3 auch angepasste Durchmesser von 10 mm bis 80 mm der Außenkontur des Stromabnehmers 1 eingesetzt werden.

Als Materialien für den Stromabnehmer 1 können Nickel oder Nickellegierungen oder auch Molybdän zum Einsatz kommen. Zur kostengünstigeren Herstellung des Stromabnehmers 1 werden vorteilhaft handelsübliche Metallrohre 11 aus Massenproduktion, z. B. aus Kupfer oder einer Kupferlegierung verwendet, die sich vor allem leicht verformen (Pressen, Stanzen, Biegen) lassen, kostengünstig sind und aufgrund einer sehr hohen elektrischen Leitfähigkeit den Widerstand der elektrochemischen Zelle senken.

Aus Gründen der Zellenchemie wird der Stromabnehmer 1 nach der Verformung des Metallrohres 11 und der Stanzung von Schlitzen oder Durchgangslöchern 14 durch eine Nickelbeschichtung vor chemischer Abtragung geschützt. Wird z. B. eine Kathode 2 mit ZnCl₂ oder FeCl₂-Granulat verwendet, so kann der Stromabnehmer 1 durchaus aus Kupfer bestehen, wenn die Zellspannung geringer gewählt wird als die Spannung, ab der das Kupfer (ca. 2,6 V) mit dem Salz über den Sekundärelektrolyten 22 zu CuCl bzw. CuCl₂ reagiert. Die Verwendung von Nickel oder Molybdän als Schutzschicht ist jedoch eine zuverlässige Möglichkeit, um den Stromabnehmer 1 vor Abtragung zu schützen, sodass sogar Aluminiumrohre zum Einsatz kommen können. Es können aber je nach Zellenchemie (z. B. CuCl, CoCl₂, CrCl₂ oder ZnCl₂) auch andere Werkstoffkombinationen gewählt werden.

Werden in die gefertigten Durchgangslöcher 14 (z. B. gestanzt vor, bei oder nach dem Pressen) des Metallrohres 11 zusätzlich Metallbüschel 15 in Form von Metallstreifen oder Metalldrähten aus z. B. Nickel oder Molybdän eingebracht, so wird die Oberfläche des Stromabnehmers 1 erheblich vergrößert und insbesondere bei einem flach gepressten Rohrabschnitt 12 an eine zylindrische Außenkontur angenähnert. Anstatt von Metalldrähten können gleichbedeutend auch Stäbe (nicht gezeichnet) Anwendung finden. Durch die Verwendung von Molybdän statt Nickel kann bei der Verwendung einer Kathode 2 aus beispielsweise FeCl₂ die maximale Ladespannung höher ausfallen und durch eine noch bessere Leitfähigkeit (Mo: 18,2·10⁶ S/m; Ni: 13,9·10⁶ S/m) die Leistungsfähigkeit der Zelle zusätzlich gesteigert werden.

Durch eine Variation der Drahtlängen der Metallbüschel 15, deren Durchmesser, Anzahl und Ausrichtung kann eine sehr gleichmäßige Widerstandssenkung der Kathode 2 im Kathodenraum 21 hin zum Separator 3 erfolgen.

Die Leistungsfähigkeit der Zelle kann maßgeblich beeinflusst werden, indem entweder die Anzahl und Größe (Drahtlängen und -durchmesser) auf ein Minimum reduziert werden und somit die Na/MCl₂-Zelle auf Speicherkapazität hin optimiert wird oder viele an den Kathodenraum 21 angepasste Drähte der Metallbüschel 15 Verwendung finden, was in der Folge zu einer Reduzierung der Kapazität jedoch erhöhten Leistungen führt. Bis nahe an den Separator 3 heranreichende Metallbüschel 15 führen außerdem dazu, dass die Elektronen nicht mehr - wie nach dem Stand der Technik üblich - den Weg über die einzelnen miteinander in Kontakt stehenden Metallpartikel nehmen, sondern ein schneller Transport über die Drähte der Metallbüschel 15 als Festkörper erfolgen kann, da im geladenen Zustand die Menge an nicht chloriertem, elektrisch leitfähigem Metall gemindert ist und die Lade- bzw. Entladereaktion stets im kürzesten Abstand zum Separator 3 beginnt.

Als Ausführungsbeispiel wird von einem ca. 300 mm langen und 5 mm Durchmesser großen Metallrohr 11 ausgegangen, was zu einer aktiven Oberfläche (die mit einer Höhe von 270 mm in Kontakt mit der Kathode 2 steht) von ca. 42,6 cm² führt. Versieht man das Metallrohr 11 mit dreizehn Durchgangslöchern 14 und jedes Durchgangsloch 14 (außer dem obersten Durchgangsloch 14 am Einfüllrohr 13) mit Metallbüscheln 15 aus jeweils dreizehn 0,7 mm dicken und ca. 32 mm langen Drähten, so beträgt die Oberfläche der Metallbüschel 15 zusätzliche 110 cm², bei 1 mm dicken Drähten sogar 160 cm², mit dem zusätzlichen Vorteil, dass die schnellen Elektronen-Einkopplungspfade (Drähte) bis an den Separator 3 heranreichen. Durch dieses Ausführungsbeispiel der Formung des Stromabnehmers 1 kann die Oberfläche des kathodenseitigen Stromabnehmers 1 um den Faktor fünf (von ca. 40 cm² auf 200 cm²) erhöht werden. Anstelle von Metalldrähten können auch Blechstreifen in oder an dem Metallrohr 11 angebracht, gefügt oder mit ihm verpresst werden.

Für eine ausreichende Stromfestigkeit ist der Materialquerschnitt des Metallrohres 11 entsprechend den Erfordernissen anzupassen.

Reicht ein Einpressen, Aufspreizen oder Umbiegen mit ggf. zusätzlicher Beschichtung der Drähte oder Bleche der Metallbüschel 15 mit dem gepressten Rohrabschnitt 12 nicht aus, um sie gegen ein Herausrutschen zu fixieren bzw. den Übergangswiderstand ausreichend zu senken, so besteht die Möglichkeit, diese mit einem Schweiß- oder Lötprozess zu fixieren. Es kann auch ein Werkstoff mit einer niedrigeren Leitfähigkeit als Kupfer als Grundwerkstoff für die Drähte, Stäbe oder Bleche der Metallbüschel 15 verwendet werden, um diese dann zusammen mit dem gepressten Rohrabschnitt 12 mit einer chemisch beständigen Schutzschicht, z. B. aus Nickel, Molybdän, zu versehen, wenn die Zellenchemie und somit die Ladespannung entsprechend angepasst wird. Grundwerkstoffe aus z. B. Kupfer oder Nickel können auch mit Graphen beschichtet werden, um die Leitfähigkeit noch weiter zu erhöhen.

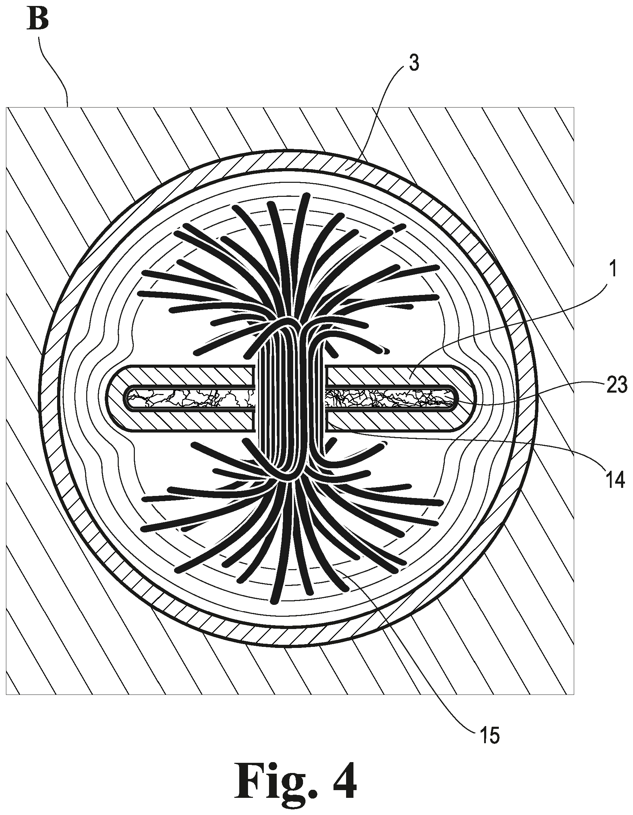

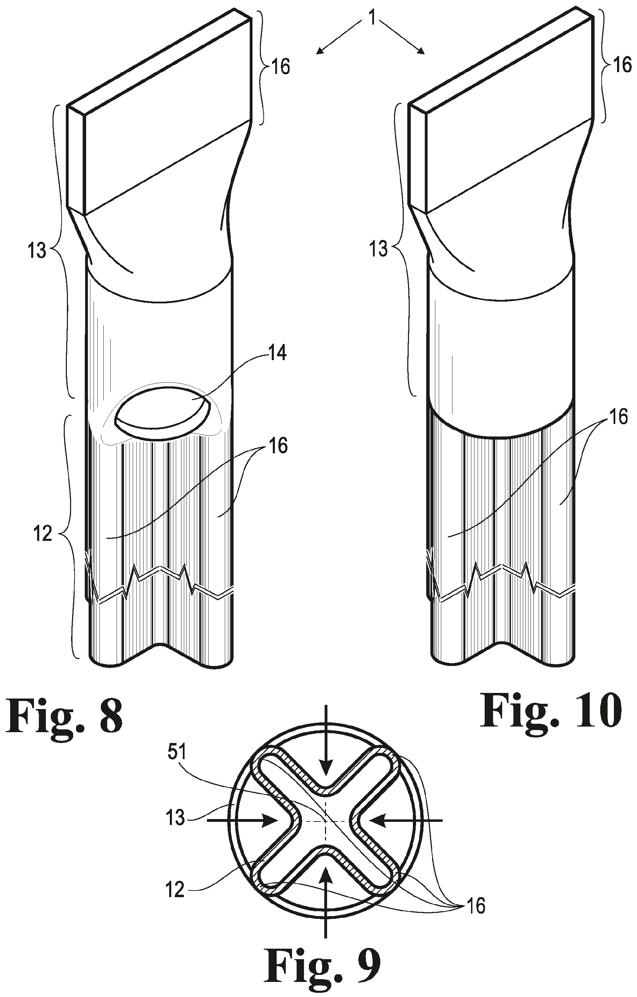

Die Maßnahme der zur Oberflächenvergrößerung genutzten Metallbüschel 15 (aus vorzugsweise Metalldrähten) im Falle eines gepressten Stromabnehmers 1 bringt noch einen weiteren wesentlichen Vorteil mit sich, der darin besteht, dass sich die Stromverteilung in einem vorzugsweise verwendeten zylindrischen Separator 3 homogener ausbildet, weil aus der flachen Form des gepressten Rohrabschnitts 12 resultierende Unterschiede der radialen Widerstandsgradienten minimiert bzw. gleichmäßiger um die zentrale Achse 51 verteilt sind. Eine so homogenisierte Stromverteilung des erfindungsgemäßen Stromabnehmers 1 innerhalb eines zylindrischen Separators 3 ist in Fig. 4 qualitativ dargestellt. Ein ähnliches Verhalten der Stromverteilung wird mit einer sternförmigen Pressung des Metallrohres 11 für den Stromabnehmer 1 gemäß der Darstellung von Fig. 9 erreicht. Ferner kann die Pressform des Metallrohres 11 auch der Kontur des Separators 3 angeglichen werden.

Die gleichmäßigste Stromdichteverteilung innerhalb des Kathodenraumes 21, die in einem rotationssymmetrischen Separator 3 erzeugbar ist, wird durch einen ebenfalls runden und mittig im Kathodenraum 21 angeordneten Stromabnehmer 1 in Form eines ungepressten Metallrohres 11 gewährleistet. Dieses Metallrohr 11 kann dann lediglich in einem oberen, nur wenige Millimeter langen gepressten Rohrabschnitt 12 gepresst sein, sodass der als Einfüllrohr 13 bezeichnete Bereich für die Befüllung des Kathodenraums 21 und gleichzeitig das Innenvolumen des Stromabnehmers 1 als ein Reservoir 24 für den Sekundärelektrolyt 22 unterhalb des gepressten Rohrabschnitts 12 frei bleibt. Der Stromabnehmer 1 in Rohrform kann dann im untersten Endbereich entweder soweit zugepresst werden, dass lediglich die Salzschmelze des Sekundärelektrolyten 22 in das Sekundärelektrolyt-Reservoir 24 eindringen kann, oder das Metallrohr 11 wird wenige Zentimeter oberhalb des untersten Endbereichs so leicht gepresst, dass ein Kohlenstofffilz 23 bis zu diesem Anschlag eingeschoben werden kann und das Eindringen von z. B. als Granulat eingefüllter Kathode 2 unterbindet.

In einer weiteren Ausführung wird der Kohlenstofffilz 23 bis zum wenige Millimeter langen gepressten Rohrabschnitt 12 im Bereich A innerhalb des Stromabnehmers 1 positioniert, sodass der Kohlenstofffilz 23 aus dem Metallrohr 11 herausragt oder mit ihm abschließt. Das Metallrohr 11 muss keine in sich geschlossene Kontur aufweisen, sondern muss lediglich gewährleisten, dass das Reservoir 24 mit dem Sekundärelektrolyt 22 infiltriert wird und kein Granulat der Kathode 2 eindringen kann. Somit sind auch Schlitze längs oder quer zur Mittenachse des Metallrohres 11 zulässig, nicht jedoch im Einfüllrohr 13 im Bereich des Kathodenverschlussteils 61 bis außerhalb der Zelle (wegen der erforderlichen Zelldichtigkeit).

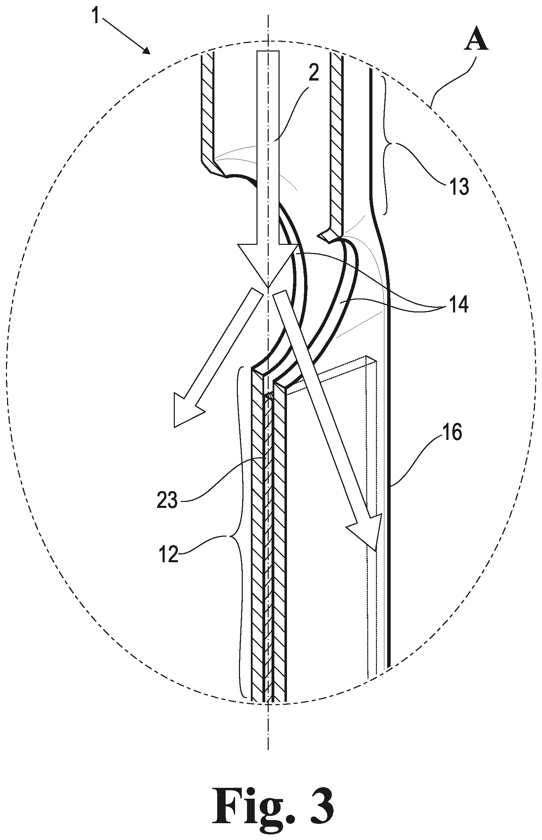

Das Metallrohr 11 kann in einer weiteren Ausführung vor dem Pressen mit einem zusammengerollten Kohlenstofffilz 23 soweit gefüllt werden, dass nur im oberen Rohrabschnitt, dem Einfüllrohr 13, ein Hohlraum verbleibt. Anschließend wird der mit einem Kohlenstofffilz 23 versehene Stromabnehmer 1 in dem später mit der Kathode 2 in Kontakt stehenden Metallrohr 11 gepresst und gelocht und vorzugsweise - gemäß der Ausführung von Fig. 2 - mit Metallbüscheln 15 von Metalldrähten versehen, wobei das oberste Durchgangsloch 14 im Übergangsbereich zwischen gepresstem Rohrabschnitt 12 und Einfüllrohr 13 frei verbleibt, d. h. dass kein Metallbüschel 15 eingeschoben wird, weil dieses Durchgangsloch 14 - wie in Fig. 3 aus dem vergrößerten Detailausschnitt A von Fig. 1 ersichtlich - für die Befüllung mit dem Granulat der Kathode 2 und anschließend für die flüssige Infiltration des Sekundärelektrolyten 22 vorgesehen ist.

Es besteht die Möglichkeit, dass der gepresste Rohrabschnitt 12 oder ein ungepresstes Metallrohr 11 unterhalb des für die Kathodenbefüllung vorgesehenen obersten Durchgangslochs 14 wenigstens ein weiteres Durchgangsloch 14 aufweist, das keine Metallbüschel 15 beinhaltet, sodass der Sekundärelektrolyt 22 aus dem Kohlenstofffilz 23 oder aus dem Reservoir 24 im ungepressten Metallrohr 11 aus dem Inneren des Stromabnehmers 1 zusätzlich austreten kann und die Granulate der Kathode 2 gleichmäßig benetzt.

Anstatt das Metallrohr 11 des Stromabnehmers 1 ebenflächig zu pressen, können zur Oberflächenvergrößerung auch zusätzlich Strukturen in das Metall geprägt werden (Wellen, Nuten, Rillen, Schlitze, etc.).

Der Einfüllvorgang der Kathode 2 als Gemisch von granulierten Metallpulvern, wie z. B. Nickel, Eisen, Aluminium, aber auch Kupfer, Kobalt, Chrom oder Zink, die erst beim späteren Laden der Zelle zu Metallhalogeniden gewandelt werden, und einem Natriumhalogenid, beispielsweise Natriumchlorid, -iodid, -bromid oder -fluorid, erfolgt dann in der in Fig. 3 stilisiert dargestellten Weise durch Einschütten der Metall- und Metallhalogenidpulver in Form von gepressten Granulaten. Die Granulate der Kathode 2 treffen dann auf den gepressten Rohrabschnitt 12 und werden durch vorzugsweise zwei Öffnungen des nicht verpressten obersten Durchgangslochs 14 seitlich abgelenkt. Für eine gute Rieselfähigkeit ist die Dimensionierung vom Durchgangsloch 14 oder weiterer Durchgangslöcher 14 im Einfüllrohr 13 an die Granulatgröße der Kathode 2 anzupassen.

Je größer die Oberfläche des kathodenseitigen Stromabnehmers 1 ausgebildet ist, desto geringer ist der Übergangswiderstand zwischen dem porösen Metallnetzwerk (gebildet beispielsweise durch nicht chloriertes Nickel oder Eisen im Kathodengranulat) und dem Stromabnehmer 1.

Würde man zum vorgenannten Zweck den Stromabnehmer 1 als Metallrohr 11 mit vergrößertem Durchmesser ausformen, wobei der innere Hohlraum des Metallrohres 11 als Reservoir 24 des Sekundärelektrolyten 22 zur Verfügung steht, so würde zwar dessen elektrisch leitfähige Oberfläche ebenfalls zunehmen, allerdings würde dann die Speicherkapazität unnötig verringert werden, weil ab einem bestimmten Innenvolumen des Metallrohres 11 mehr Sekundärelektrolyt 22 im Reservoir 24 gespeichert wird, als dies für den Ladeprozess notwendig wäre, und sich der für das Granulat der Kathode 2 verbleibende Kathodenraum 21 verringert.

Die Erfindung sieht deshalb als eine zweckmäßige Gestaltung des kathodenseitigen Stromabnehmers 1 ein verringertes Innenvolumen und eine Oberflächenvergrößerung sowie eine räumlich an den zylindrisch angenommenen Separator 3 angepasste Form der Außenkontur vor. In einer bevorzugten Ausführung, die durch einen flach gepressten Rohrabschnitt 12 mit Durchgangslöchern 14 und darin eingeschobenen Metallbüscheln 15 von Metallstreifen oder - drähten so gestaltet ist, wie in der Ebene B aus Fig. 2 aus der Schnittdarstellung von Fig. 4 ersichtlich, können die als gepresste Bündel in die Durchgangslöcher 14 eingeschobenen Metallstreifen oder Metalldrähte durch nachfolgendes Auffächern und Stauchen an eine zylinderähnliche Außenform des Stromabnehmers 1 angeglichen werden, womit sich eine gleichmäßige radiale Widerstandsverteilung im Kathodenraum 21 des Separators 3 ergibt.

Der Durchmesser des Metallrohres 11 bestimmt sich nach der Größe und Rieselfähigkeit der Granulate der Kathode 2 bzw. der für eine einzuhaltende Befüllzeit erforderlichen Durchmesser der als Befüllöffnung ausgebildeten Durchgangslöcher 14. Die für die Oberflächenvergrößerung des Stromabnehmers 1 genutzten Durchgangslöcher 14 können aber davon abweichen. Durch eine Variation der Drahtlängen, Durchmesser, deren Anzahl und Ausrichtung kann dann eine sehr gleichmäßige, exakte Widerstandssenkung in der Kathode 2 erfolgen.

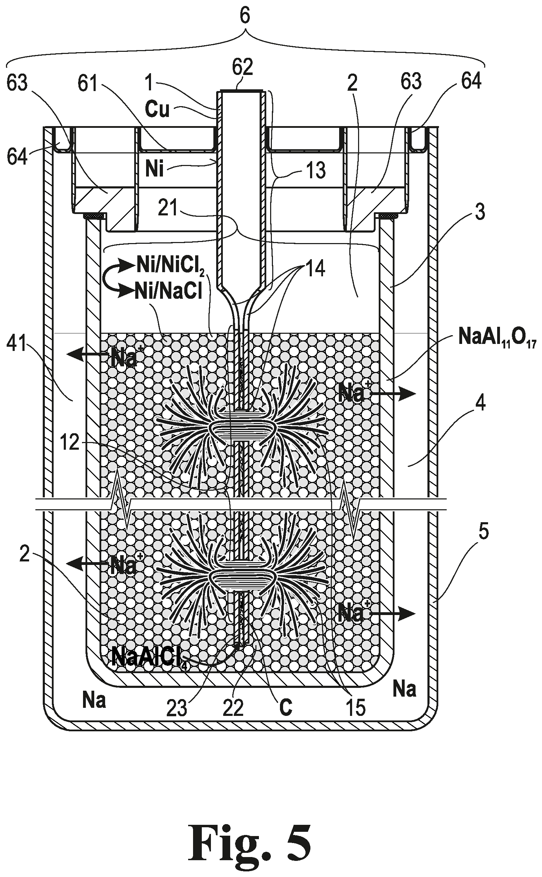

Fig. 5 zeigt eine bevorzugte Ausgestaltung der elektrochemischen Zelle gemäß der Erfindung als schematische (nicht maßstabsgerechte) Darstellung eines Axialschnittes der Zelle. In der Zeichnung sind die wesentlichen Bestandteile der elektrochemischen Zelle in einer prinzipiellen räumlichen Anordnung gezeigt und diese sind mit einem konkreten Ausführungsbeispiel im Sinne einer speziellen Zellenchemie ausgeführt.

In der Gestaltung der Zelle gemäß Fig. 5 ist der kathodenseitige Stromabnehmer 1 aus einem Kupferrohr gefertigt, das zur Erhöhung der chemischen Beständigkeit mit einer Nickelbeschichtung versehen ist. Die Verwendung von Kupfer oder Aluminium als Grundwerkstoff des Metallrohres 11 senkt aufgrund der höheren elektrischen Leitfähigkeit den elektrischen Widerstand des Stromabnehmers 1, bedingt durch die dünnwandigen Hohlstrukturen und eine im Vergleich zu einem Reinnickel-Vollkörper gefertigte Kathode 2 werden die Herstellungskosten reduziert und das Umformen (Pressen und Stanzen) vereinfacht, da die Wandstärken trotz größerer Oberfläche geringer sind als jene eines Nicht-Hohlkörpers. In einer alternativen Ausführung kann der Stromabnehmer 1 aber auch komplett aus Nickel gefertigt sein.

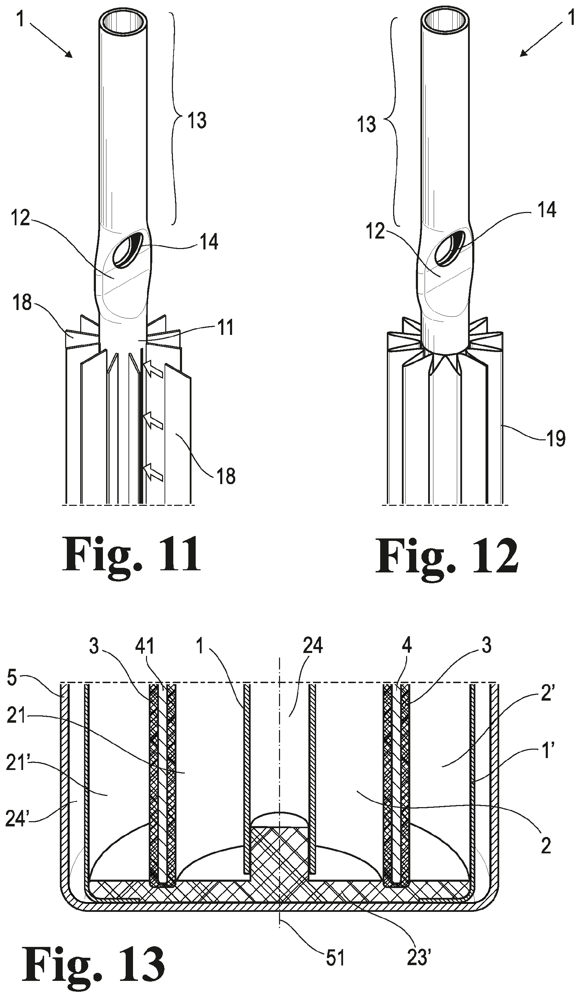

Alternativ zu dem in Fig. 5 gezeigten Zellenaufbau kann die Kathode 2 auch außerhalb des Separators 3 angeordnet sein. Sie kann dann entweder ausschließlich außerhalb des Separators 3, also im Vergleich zum Aufbau von Fig. 5 invertiert (nicht gezeichnet), oder bei einer doppelwandigen Ausführung des Separators 3 mit eingeschlossenem Anodenraum 41 - wie in Fig. 13 gezeigt - zu dieser doppelwandigen Struktur des Separators 3 sowohl innen als auch außen angeordnet sein, wie es prinzipiell aus der WO 2018/138740 A1 bekannt ist.

Der kathodenseitige Stromabnehmer 1 aus vernickeltem Kupferrohr gemäß Fig. 5 ist in der Form nach Fig. 2 gefertigt und kollinear zur Achse des Separators 3 ausgerichtet. Der Separator 3 unterteilt das Innenvolumen des als anodenseitiger Stromabnehmer wirkenden Gehäuses 5 in einen äußeren Anodenraum 41, der in diesem Beispiel im geladenen Zustand mit metallischem Natrium als Anode 4 gefüllt ist, und den inneren Kathodenraum 21, der in diesem Ausführungsbeispiel mit Granulaten aus Nickel/NaCl (ungeladener Zustand) bzw. Nickel/NiCl2 (vollgeladener Zustand) gefüllt ist, die durch den oberen Rohrabschnitt, das sogenannte Einfüllrohr 13 des Stromabnehmers 1, eingeschüttet wurden. Um ein schnelles Befüllen des Kathodenraums 21 mit Kathodengranulat zu gewährleisten und außerdem einen geringen Innenwiderstand zu erreichen, ist der Querschnitt des Metallrohres 11 und des Durchgangsloches 14 an das Volumen der Kathode 2 und die gesamte Zellendimension anzupassen.

Der gepresste Rohrabschnitt 12 des Stromabnehmers 1 ist in dieser Ausführung von Fig. 5 in den gestanzten Durchgangslöchern 14 mit Metallbüscheln 15 aus Metalldrähten bestückt. Die zur Oberflächenvergrößerung eingesetzten Metallbüschel 15 können aus Nickel- oder Molybdändrähten bestehen. Die Durchgangslöcher 14 können beispielsweise vor, bei oder nach dem Pressen des Metallrohres 11 gestanzt werden, um diese anschließend zusätzlich mit Metallbüscheln 15, z. B. aus Nickel oder Molybdän, zu füllen und so die Oberfläche des Stromabnehmers 1 erheblich zu vergrößern. Ein Vergolden des Stromabnehmers 1 und seiner Metallbüschel 15 würde den Widerstand des Stromabnehmers 1 nochmals senken, erhöht aber die Fertigungskosten.

Weiterhin ist der Kathodenraum 21 innerhalb des Separators 3, der als fester Primärelektrolyt aus Natrium-β-Aluminat gefertigt ist, mit einem flüssigen Sekundärelektrolyt 22 gefüllt, der in diesem Beispiel aus Natriumtetrachloroaluminat (NaAlCl₄) besteht. Damit lediglich der Sekundärelektrolyt 22 und keine Ni/NaCl Granulate in den Innenraum des Stromabnehmers 1 unterhalb des Einfüllrohres 13 gelangen können, enthält das Metallrohr 11 innen entweder einen Kohlenstofffilz 23, der vor dem Pressen im Metallrohr 11 eingelegt und mit eingepresst wurde, oder die Spaltmaße des gepressten Rohrabschnitts 12 unterhalb des Einfüllrohres 13 und des untersten Endes des gepressten Rohrabschnitts 12 sind hinreichend klein dimensioniert.

Die Montage des kathodenseitigen Stromabnehmers 1 in der elektrochemischen Zelle ist vorteilhaft als eine Ein-Schritt-Fügung ausführbar, die je nach Auslegung bei unterschiedlichen Atmosphären und Temperaturen in geeigneten Öfen erfolgt. Bei der Ein-Schritt-Fügung wird der Keramik-Keramik-Verbund zwischen dem Separator 3 und dem keramischen Isolatorfügering 63, der z. B. aus Korund bestehen kann, sowie der Metall-Keramik-Verbund zwischen dem Separator 3 und einem metallischen Kathodenverschlussteil 61 und einem metallischen Anodenverschlussteil 64 zum hermetischen Abdichten der elektrochemischen Zelle mit einem einzigen Fügeschritt realisiert. Hierfür werden die metallischen Verschlussteile 61 und 64 vorteilhaft durch Tiefziehen gefertigt. Das den Kathodenraum 21 verschließende Kathodenverschlussteil 61 wird mit einer zentralen Öffnung versehen, in die der Stromabnehmer 1 mit einer der erfindungsgemäßen Ausführungen, z. B. mit dem mit Metallbüscheln 15 versehenen gepressten Rohrabschnitt 12 eingeführt und an dem ungepressten Rohrabschnitt, dem Einfüllrohr 13, vor dem Fügen verschweißt oder verlötet wird. In einer anderen Ausführung wird das Einfüllrohr 13 während der Ein-Schritt-Fügung mit dem metallischen Kathodenverschlussteil 61 verlötet oder erst im Anschluss an den Fügeprozess mit diesem verschweißt.

Während des Fügeschrittes der Ein-Schritt-Fügung bestimmt der den Kathodenraum 21 umgebene Separator 3 oder z. B. das Gehäuse 5 mit seinen Abmaßen die erforderlichen Freiräume im Ofen. Eine Positionierung des Stromabnehmers 1 innerhalb des Separators 3 erhöht somit nicht den benötigten Freiraum und stellt keinen Nachteil dar.

Während der Ein-Schritt-Fügung wird auch das Anodenverschlussteil 64 als ein weiteres z. B. Tiefziehteil aus Metall an einer geeigneten Stelle mit dem Isolatorfügering 63 verbunden, wobei das Gehäuse 5 (als anodenseitiger Stromabnehmer) mit dem metallischen Anodenverschlussteil 64 auch im Anschluss an den Fügeprozess verschweißt werden kann und sich somit der hermetisch dichte Anodenraum 41 ausbildet. Wurde ein Kohlenstofffilz 23 in den Stromabnehmer 1 eingebracht, so kann die vorzugsweise Ein-Schritt-Fügung bzw. der Hochtemperaturlötprozess nur unter Ausschluss von Sauerstoff erfolgen, da sonst der Kohlenstoff oxidiert wird. Die elektrochemische Zelle besitzt im Anschluss an die mit der Ein-Schritt-Fügung einhergehenden Schweißprozesse nur noch eine einzige Öffnung, nämlich das offene Rohrende des Einfüllrohres 13 des kathodenseitigen Stromabnehmers 1, oder im Falle mehrerer Stromabnehmer 1, 1' eine Mehrzahl von Öffnungen. Über diese Öffnung des Einfüllrohres 13 wird das Granulatgemisch der Kathode 2 in den Kathodenraum 21 der elektrochemischen Zelle eingebracht. Unter Ausschluss von Sauerstoff und Wasser, z. B. unter Vakuum oder durch Inertgasspülung, wird anschließend der Sekundärelektrolyt 22 in flüssiger Form durch dieselbe Öffnung des Einfüllrohres 13 in den Kathodenraum 21 der Zelle eingebracht. Abschließend wird dann die Öffnung der Zelle - z. B. mit einem Tiefziehteil oder einer Blechronde 62 zum Verschließen des oberen Rohrendes des Einfüllrohres 13 - am herausstehenden Ende des Stromabnehmers 1 zugeschweißt.

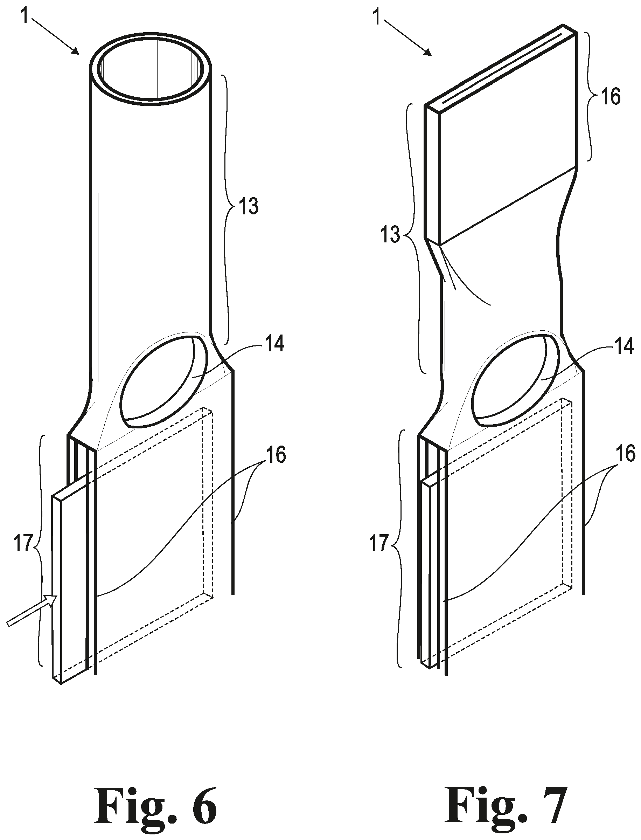

In einem weiteren Ausführungsbeispiel der abschließenden Zellenmontage, das in Fig. 6 und 7 schematisch gezeigt ist, steht das Einfüllrohr 13 des Stromabnehmers 1 soweit aus dem Kathodenverschlussteil 61 heraus, dass es außerhalb der fertig befüllten Zelle abgequetscht wird und die sich bildende schmale Stirnfläche direkt zugeschweißt werden kann.

In den Fig. 6 und 7 ist noch eine weitere Modifikation des Stromabnehmers 1 dargestellt, die dazu dient, den Kohlenstofffilz 23 noch nach dem Pressen des Metallrohres 11 in dieses einzubringen. Dazu wird nach dem Erzeugen des gepressten Rohrabschnitts 12 eine Quetschkante 16 beispielsweise durch Abschneiden oder Abfräsen geöffnet, sodass ein streifenförmiger Kohlenstofffilz 23 durch die seitlich abgetragene Quetschkante 17 eingeführt werden kann.

Eine weitere Ausführung des Stromabnehmers 1 ist in den Fig. 8 und 9 gezeigt. Bei dieser Ausführungsform ist zur Oberflächenvergrößerung des Metallrohres 11 (nur in Fig. 1 bezeichnet) der gepresste Rohrabschnitt 12 des Stromabnehmers 1 in vier radialen Richtungen zur zentralen Achse 51 eingepresst worden, wobei jeweils zwei Richtungen davon kollinear entgegengesetzt ausgerichtet sind. Im Ergebnis ist der Querschnitt des gepressten Rohrabschnitts 12 sternförmig, wie es in Fig. 9 zu sehen ist.

Als weitere alternative Querschnitte kann die Sternform auch drei-, fünf-, sechszackig usw. (nicht gezeichnet) ausgeprägt werden. Obwohl in Fig. 8 nicht eingezeichnet, können auch in diesem Beispiel Durchgangslöcher 14 mit Metallbüscheln 15 oder Schlitze mit Blechen, wie in Fig. 11 gezeigt, zusätzlich eingebracht werden, um die Oberfläche weiter zu vergrößern.

Eine weitere Modifikation zur Erzeugung eines sternförmigen Querschnitts des gepressten Rohrabschnitts 12, die in Fig. 10 dargestellt ist, kann so erfolgen, dass zunächst ein Metallrohr 11 sternförmig, wie in Fig. 9 sichtbar, erzeugt wird und danach der ungepresste Rohrabschnitt als Einfüllrohr 13 auf den gepressten Rohrabschnitt 12 aufgeschweißt wird. Dadurch entstehen vier Durchgangslöcher 14 für das Einfüllen des Kathodengranulats mittels der abweichenden Querschnittsformen des gepressten Rohrabschnitts 12 und des zylindrischen Einfüllrohres 13 automatisch und müssen in diesem Fall nicht gestanzt werden. Um ein Eindringen von Ni/NaCl Granulaten in den Innenraum des gepressten Rohrabschnittes 12 zu verhindern, kann der obere gepresste Bereich und die untere Öffnung des Stromabnehmers 1 bis auf ein hinreichend kleines Spaltmaß gefertigt werden oder zur Abdichtung ein Kohlenstofffilz 23 eingelegt werden.

In einer weiteren Ausgestaltung des vorteilhaft im Kathodenraum 21 axial positionierten Stromabnehmers 1 entsprechend dem in Fig. 11 dargestellten Ausführungsbeispiel wird zur Befüllung des Kathodenraumes 21 ein rohrförmiger Grundkörper (Metallrohr 11) aus einem elektrisch gut leitenden Metall in einen unteren gepressten Rohrabschnitt 12 und einen oberen ungepressten Rohrabschnitt, das Einfüllrohr 13, unterteilt. Durch den gepressten Rohrabschnitt 12 kann die Kathode 2 lediglich in den Kathodenraum 21 über ein Durchgangsloch 14 eingefüllt werden, ohne in das Sekundärelektrolyt-Reservoir 24 im Inneren des Metallrohres 11 zu gelangen. Durch Schlitze im Metallrohr 11 unterhalb des gepressten Rohrabschnittes 12 können zusätzlich aus eingelassenen Blechen gefertigte Finnen 18 einsetzt werden, die mit dem Metallrohr 11 verschweißt, verpresst oder verlötet werden. Die Finnen 18 können dabei durchgehen, einzeln angesetzt oder derartig umgeformt werden, dass ein Blech im Inneren der Kontur des Metallrohres 11 angepasst ist und somit mindestens zwei Finnen 18 bildet.

In einer weiteren Ausführung gemäß Fig. 12 können die Finnen 18 auch nur durch ein mäanderförmig gefaltetes Blech 19 gebildet werden.

Wie in Fig. 12 ersichtlich, kann aus einem gefalteten Blech 19 auch eine sternförmige oder gewellte Querschnittskontur des Sekundärelektrolyt-Reservoir 24 gebildet werden, das dann mit dem in das offene Einfüllrohr 13 und den gepressten Rohrabschnitt 12 unterteilten Metallrohr 11 des Stromabnehmers 1 verschweißt, verlötet oder verpresst wird. Hierfür kann das gefaltete Blech 19 erst mit finnenartigen Strukturen gefertigt und anschließend zu einer im Inneren z. B. als Rohrform gefertigten Struktur gebogen und an einer Finne 18 verbunden werden. Anstelle eines gefalteten Bleches 19 können auch mehrere gefaltete Bleche 19 zur Ausformung genutzt werden. Die Spaltmaße zwischen den gebildeten Finnen 18 müssen klein genug sein, dass keine Kathode 2 in das Sekundärelektrolyt-Reservoir 24 eindringen kann. Auch in dem Fall, dass die inneren Abmessungen der resultierenden sternförmigen Querschnittskontur kleiner oder größer als die untere Öffnung des Metallrohrs 11 sind, muss das Sekundärelektrolyt-Reservoir 24 dennoch frei von Granulaten der Kathode 2 bleiben und die verbleibenden Öffnungen müssen, z. B. durch ein weiteres Verpressen mindestens des unteren Endes des Metallrohrs 11, hinreichend eng geschlossen werden oder ein bzw. mehrere Kohlenstofffilze 23 müssen eingebracht werden.

Fig. 13 zeigt eine weitere Maßnahme zur Leistungserhöhung der elektrochemischen Zelle, die als radiale Doppelzelle ausgebildet ist. Dabei ist ein weiterer Stromabnehmer 1' für die Kontaktierung einer weiteren Kathode 2' im Raum zwischen dem Gehäuse 5 und der Außenwand eines in diesem Beispiel doppelwandigen Separators 3, der den Anodenraum 41 für die Anode 4 in einem zylindrischen Ringspalt beinhaltet, vorgesehen. Der Stromabnehmer 1', der vorteilhaft zusätzlich zu dem in der zentralen Achse 51 als ungepresstes Metallrohr 11 (in Fig. 13 nicht bezeichnet) positionierter Stromabnehmer 1 genutzt wird, ermöglicht ebenfalls die Substituierung des Kohlenstofffilzes 23, indem das Sekundärelektrolyt-Reservoir 24' zwischen dem Stromabnehmer 1' und der Innenwand des Gehäuses 5 gebildet wird, während gleichzeitig ein direkter Kontakt der Granulate der weiteren Kathode 2' zur Gehäusewand unterbunden wird, aber der elektrische Kontakt über den Stromabnehmer 1' erfolgt, wodurch die elektrochemische Korrosionsanforderung an das eigentliche Gehäuse 5 gemindert wird. Gleichbedeutend kann auch bei der Ausgestaltung des weiteren Stromabnehmers 1' dessen Oberfläche weiter vergrößert werden, indem entweder auch zusätzliche zur zentralen Achse 51 hin ausgerichtete gefaltete Bleche 19 angefügt werden oder die Blechstreifen selbst eine der Gehäusekontur ähnliche Bauweise aufweisen und zur zentralen Achse 51 hin ausgerichtete Finnen 18 ausbilden. Dabei kann bei Verwendung des zusätzlichen Stromabnehmers 1', gefertigt z. B. als Metallrohr 11 aus Nickel oder je nach Zellenchemie auch aus vernickeltem Kupfer, mit einem Durchmesser kleiner als der Innendurchmesser des Gehäuses 5 das weitere Sekundärelektrolyt-Reservoir 24' so geschaffen werden, dass gleichzeitig die elektrochemisch aktive Kathode 2' elektrisch kontaktiert ist und auf ein Kohlenstofffilz 23 über die Füllhöhe der Kathode 2' verzichtet werden kann. Durch einen im Bodenbereich des Gehäuses 5 positionierten weiteren Kohlenstofffilz 23' wird ein direkter Kontakt der Granulate der Kathode 2 zur Wand des Gehäuses 5 unterbunden. Der im äußeren Bereich des weiteren Kathodenraums 21' positionierte weitere Stromabnehmer 1' kann anstatt eines am Boden gebördelten Rohres auch durch im Bodenbereich des Gehäuses 5 umgebogene Blechstreifen gebildet werden, indem er direkt mit dem Boden des Gehäuses 5, das entweder ein zum Gehäuse 5 separates Bauteil darstellt oder durch Tiefziehen des Gehäuses 5 in einem Stück hergestellt wurde, verbunden ist (z. B. Punktschweißung, Lötung). Um den Übergangswiderstand des weiteren Stromabnehmers 1' auf das Gehäuse 5 weiter zu reduzieren, können die einzelnen Blechstreifen des weiteren Stromabnehmers 1' so auf Überlänge gefertigt werden, dass sie jeweils zusätzlich umgebogen werden und dann einen weiteren, flächigen Kontakt mit der Innenwand des Gehäuses 5 ermöglichen (nicht in der Zeichnung ersichtlich). Alternativ ist ein Verschweißen des Stromabnehmers 1' im oberen Verschlussbereich der Zelle mit dem Gehäuse 5 oder weiteren Teilen des Verschlussbereichs möglich. Für den Stromabnehmer 1 bleiben alle Varianten, wie zuvor beschrieben, möglich. Bevorzugt kann aber auf die Bauformen von Fig. 11 und 12 zurückgegriffen werden.

Mit der Erfindung wird eine besonders kostengünstige elektrochemische Zelle aus wenigen Teilen zusammengesetzt, die einfach zu fertigen und zusammenzufügen sind. Insbesondere ermöglicht die neuartige Form des Stromabnehmers 1 eine einfache und effektive Befüllung der Zelle mit den Metallgranulaten der Kathode 2 und dem Sekundärelektrolyt 22, nachdem die Zelle bereits fertig montiert und hermetisch verschweißt ist. Durch die Möglichkeit, den Stromabnehmer 1 monolithisch herzustellen und die Kontaktierung von einer Zelle zur nächsten direkt mit dem verpressten und zugeschweißten Einfüllrohr 13 zu ermöglichen, entfallen Fügeprozesse und der Übergangswiderstand kann zusätzlich gesenkt werden. Indem der Stromabnehmer 1 in einem separaten Innenvolumen für die Ni/NaCl-Granulate unzugänglich, aber durch den Sekundärelektrolyt 22 gut infiltrierbar ist, kann die Funktion des Kohlenstofffilzes 23 als Sekundärelektrolyt-Reservoir 24 substituiert werden. Des Weiteren wird mit der speziellen Art der Oberflächenvergrößerung des Stromabnehmers 1 eine gleichmäßigere radiale Stromverteilung im Kathodenraum 21 erreicht.

### Bezugszeichenliste

- 1, 1': (kathodenseitiger) Stromabnehmer
- 11: Metallrohr
- 12: gepresster Rohrabschnitt
- 13: Einfüllrohr/ ungepresster Rohrabschnitt
- 14: Stanzung/ Durchgangsloch
- 15: Metallbüschel (aus Metallstreifen oder -drähten)
- 16: Quetschkante
- 17: abgetragene Quetschkante
- 18: Finne
- 19: gefaltetes Blech
- 2, 2': Kathode
- 21, 21': Kathodenraum
- 22: Sekundärelektrolyt
- 23,23': (Kohlenstoff-) Filz
- 24, 24': (Sekundärelektrolyt-) Reservoir

- 3: Separator (fester Primärelektrolyt)

- 4: Anode
- 41: Anodenraum

- 5: Gehäuse
- 51: zentrale Achse

- 6: Zellenverschluss
- 61: (metallisches) Kathodenverschlussteil
- 62: Blechronde
- 63: (keramischer) Isolatorfügering
- 64: Anodenverschlussteil

## Patentansprüche

1. Elektrochemische Natrium-Metallhalogenid-Zelle, enthaltend ein Gehäuse (5) mit einer zentralen Achse (51), einen um die zentrale Achse (51) des Gehäuses (5) äquidistant zum Gehäuse (5) ausgedehnten Separator (3), der als fester Primärelektrolyt einen Anodenraum (41) von einem Kathodenraum (21) elektrisch isolierend und hermetisch abtrennt, aber durchlässig ist für Natriumionen, eine den Kathodenraum (21) füllende Kathode (2) aus einem porösen Gemisch von Metallpulver- und Metallhalogenidpulver-Granulaten sowie einen den Kathodenraum (21) und das poröse Gemisch der Kathode (2) durchtränkenden Sekundärelektrolyt (22) aus einer Natrium-Metallhalogenid-Salzschmelze und einen im Kathodenraum (21) um die zentrale Achse (51) langgestreckt ausgebildeten metallischen kathodenseitigen Stromabnehmer (1), **dadurch gekennzeichnet, dass**
der Stromabnehmer (1) oberhalb eines in das im Separator (3) befindliche poröse Gemisch von Granulaten der Kathode (2) und im Sekundärelektrolyt (22) eingetauchten, gepressten Rohrabschnitts (12) einen ungepressten Rohrabschnitt als Einfüllrohr (13) zum Befüllen des Kathodenraumes (21) aufweist, wobei an einem Übergang vom gepressten Rohrabschnitt (12) zum ungepressten Rohrabschnitt des Einfüllrohres (13) mindestens ein das Einfüllrohr (13) nach außen öffnendes Durchgangsloch (14) vorhanden ist, sodass das Einfüllrohr (13) zum Einfüllen für das poröse Gemisch von Granulaten der Kathode (2) in den Kathodenraum (21) nur außerhalb des gepressten Rohrabschnitts (12) und zum Befüllen des gesamten Kathodenraumes (21) mit Sekundärelektrolyt (22) verwendbar ist, wobei
in einer ersten Alternative der Querschnitt des gepressten Rohres (12) sternförmig ist oder
in einer zweiten Alternative der Querschnitt des Stromabnehmers (1) rund ist und der Stromabnehmer (1) mittig im Kathodenraum (21) angeordnet ist und in Form eines ungepressten Metallrohrs (11) ausgebildet ist, welches lediglich in dem gepressten Rohrabschnitt (12) gepresst ist und den ungepressten Rohrabschnitt als das Einfüllrohr (13) aufweist, sodass das Einfüllrohr (13) für die Befüllung des Kathodenraums (21) und unterhalb des gepressten Rohrabschnitts (12) ein Innenvolumen des Stromabnehmers (1) als ein Reservoir (24) für den Sekundärelektrolyt (22) frei bleiben.

2. Elektrochemische Natrium-Metallhalogenid-Zelle nach Anspruch 1, erste Alternative, wobei die Pressform des Metallrohrs (11) der Kontur des Separators (3) angeglichen ist.

3. Elektrochemische Natrium-Metallhalogenid-Zelle nach Anspruch 1, erste Alternative, wobei das Einfüllrohr (13) auf den gepressten Rohrabschnitt (12) aufgeschweißt ist.

4. Elektrochemische Natrium-Metallhalogenid-Zelle nach Anspruch 1, zweite Alternative, wobei der Separator (3) rotationssymmetrisch ist.

5. Elektrochemische Natrium-Metallhalogenid-Zelle nach Anspruch 1, zweite Alternative, oder Anspruch 4, wobei der Querschnitt des ungepressten Metallrohres (11) viereckig, vieleckig, gewellt oder von einer Kreisgeometrie abweichend gefertigt ist.

6. Elektrochemische Natrium-Metallhalogenid-Zelle nach Anspruch 1, zweite Alternative, oder einem der Ansprüche 4 oder 5, wobei der Stromabnehmer (1) in einem untersten Endbereich entweder soweit zugepresst ist, dass lediglich die Salzschmelze des Sekundärelektrolyten (22) in das Sekundärelektrolyt-Reservoir (24) eindringen kann, oder das Metallrohr (11) oberhalb des untersten Endbereichs so leicht gepresst ist, dass ein Kohlenstofffilz (23) bis zu diesem Anschlag einschiebbar ist und das Eindringen von dem Granulat der Kathode (2) unterbindet.

7. Elektrochemische Natrium-Metallhalogenid-Zelle nach Anspruch 6, wobei der Kohlenstofffilz (23) bis zum gepressten Rohrabschnitt (12) innerhalb des Stromabnehmers (1) positioniert ist, sodass der Kohlenstofffilz (23) aus dem Metallrohr (11) herausragt oder mit dem Metallrohr (11) abschließt.

8. Elektrochemische Natrium-Metallhalogenid-Zelle nach Anspruch 6 oder 7, wobei das Metallrohr (11) eine in sich nicht geschlossene Kontur aufweist.

9. Elektrochemische Natrium-Metallhalogenid-Zelle nach einem der Ansprüche 1, zweite Alternative, oder 4 bis 8, wobei durch Schlitze im Metallrohr (11) unterhalb des gepressten Rohrabschnittes (12) aus eingelassenen Blechen gefertigte Finnen (18) eingesetzt sind.

10. Elektrochemische Natrium-Metallhalogenid-Zelle nach einem der Ansprüche 1, zweite Alternative, oder 4 bis 8, wobei aus einem gefalteten Blech (19) eine sternförmige oder gewellte Querschnittskontur des Sekundärelektrolyt-Reservoirs (24) gebildet ist.

11. Elektrochemische Zelle nach einem der Ansprüche 1 bis 10, **dadurch gekennzeichnet, dass** als Stromabnehmer (1) ein Nickel-, Aluminium- oder Kupferrohr eingesetzt ist.

12. Elektrochemische Zelle nach einem der Ansprüche 1 bis 11, **dadurch gekennzeichnet, dass** der Stromabnehmer (1) in dem gepressten Rohrabschnitt (12) einen Kohlenstofffilz (23) aufweist, der in den gepressten Rohrabschnitt (12) vor dem Pressen eingelegt worden ist.

13. Elektrochemische Zelle nach einem der Ansprüche 1 bis 11, **dadurch gekennzeichnet, dass** der Stromabnehmer (1) in dem gepressten Rohrabschnitt (12) einen Kohlenstofffilz (23) aufweist, der nach dem Pressen und dem Abtragen einer Quetschkante (16) des gepressten Rohrabschnitts (12) in den gepressten Rohrabschnitt (12) lateral einschiebbar ist.

14. Elektrochemische Zelle nach einem der Ansprüche 1 bis 13, **dadurch gekennzeichnet, dass** das Einfüllrohr (13) des Stromabnehmers (1) nach dem Einfüllen des porösen Gemisches der Kathode (2) und des Sekundärelektrolyten (22) mit einer stoffschlüssig befestigten Blechronde (62) oder einem Tiefziehteil verschlossen ist oder am oberen Rohrende des Einfüllrohres (13) gequetscht oder mit einer Löt- oder Schweißnaht hermetisch verschlossen ist.
